# EUROPÄISCHE PATENTSCHRIFT

(11) **EP 3 051 138 B1**
(45) Veröffentlichungstag und Bekanntmachung des Hinweises auf die Patenterteilung: **10.03.2021**
(21) Anmeldenummer: 15152719.9
(22) Anmeldetag: 27.01.2015
(51) Int. Cl.: F04D 19/04, F04D 29/02, F04D 29/52, F04D 29/64, F04D 29/58, B23K 20/12

(54) **Vakuumpumpengehäuse, Vakuumpumpe und Verfahren zur Herstellung eines Vakuumpumpengehäuses**
Vacuum pump housing, vacuum pump and method for producing a vacuum pump housing
Carter de pompe à vide, pompe à vide et procédé de fabrication d'un carter de pompe à vide

(43) Veröffentlichungstag der Anmeldung: 03.08.2016
(73) Patentinhaber: PFEIFFER VACUUM GMBH, 35614 Asslar (DE)
(72) Erfinder: Hofmann, Bernd, 35578 Wetzlar (DE); Mekota, Mirko, 35630 Ehringshausen (DE); Vorwerk, Peter, 35630 Ehringshausen (DE)
(74) Vertreter: Manitz Finsterwald Patent- und Rechtsanwaltspartnerschaft mbB

(56) Entgegenhaltungen:
- EP-A1- 0 695 872
- EP-A1- 1 231 383
- EP-A2- 0 197 238
- EP-A2- 1 795 757
- KR-A- 20130 100 481
- US-A1- 2007 262 488

## Beschreibung

Die vorliegende Erfindung betrifft ein Vakuumpumpengehäuse, insbesondere für eine Turbomolekularpumpe, eine Vakuumpumpe, insbesondere eine Turbomolekularpumpe, und ein Verfahren zur Herstellung eines Vakuumpumpengehäuses, insbesondere für eine Turbomolekularpumpe.

Aus dem der Anmelderin intern bekannten Stand der Technik ist es bekannt, das Gehäuse einer Vakuumpumpe, insbesondere einer Turbomolekularpumpe, aus einem Rohmaterialblock herauszuarbeiten. Nachteilig daran sind die damit verbundene lange Arbeitszeit und der sich ergebene große Abfall an Rohmaterial. Außerdem muss der Rohmaterialblock entsprechend groß ausgestaltet sein, damit das Gehäuse aus dem Rohmaterial herausgearbeitet werden kann. Es besteht somit ein großer Bedarf an Rohmaterial.

Der vorliegenden Erfindung liegt daher die Aufgabe zugrunde, ein Vakuumpumpengehäuse bereitzustellen, das auf einfache Weise und mit geringem Materialbedarf hergestellt werden kann. Der vorliegenden Erfindung liegt auch die Aufgabe zugrunde, ein Verfahren zur Herstellung eines Vakuumpumpengehäuses bereitzustellen, mittels dem bei kurzer Bearbeitungszeit und mit geringerem Materialaufwand ein Vakuumpumpengehäuse hergestellt werden kann.

Die Aufgabe wird durch ein Vakuumpumpengehäuse mit den Merkmalen des Anspruchs 1 bzw. durch ein Verfahren zur Herstellung eines Vakuumpumpengehäuses mit den Merkmalen des Anspruchs 7 gelöst. Bevorzugte Weiterbildungen und Ausführungsformen der Erfindung sind in den abhängigen Ansprüchen angegeben.

Ein erfindungsgemäßes Vakuumpumpengehäuse umfasst wenigstens zwei Gehäuseteile, die mittels eines Fügeverfahrens unlösbar zusammengefügt sind. Die Gehäuseteile können dabei vakuumdicht zusammengefügt sein, um insbesondere das Gehäuseinnere gegenüber dem Gehäuseäußeren an der Fügestelle oder den Fügestellen vakuumdicht abzuschließen.

Der vorliegenden Erfindung liegt der Gedanke zugrunde, ein Vakuumpumpengehäuse nicht aus einem einzigen Block Rohmaterial herauszuarbeiten, sondern aus zwei oder mehr Gehäuseteilen zusammenzusetzen und die Gehäuseteile mittels eines, insbesondere thermischen, Fügeverfahrens unlösbar und bevorzugt vakuumdicht miteinander zu verbinden. Die Gehäuseteile können einzeln gefertigt werden, wobei weniger Material benötigt und weniger Abfall anfällt im Vergleich zu einer Fertigung des gesamten Gehäuses aus einem einzigen Materialblock. Außerdem lassen sich die Fertigung der Gehäuseteile und das Zusammenfügen der Gehäuseteile zum Pumpengehäuse schneller ausführen als die Fertigung des Pumpengehäuses aus einem einzigen Materialblock.

Bei den Gehäuseteilen kann es sich um endkonturgetreue Gehäuseteile handeln. Das Vakuumpumpengehäuse kann daher zumindest im Wesentlichen in der vorgesehenen Endkontur durch Zusammenfügen der einzelnen Gehäuseteile unter Verwendung von zumindest einem Fügeverfahren hergestellt werden.

Bei den Gehäuseteilen oder zumindest bei einigen der Gehäuseteile kann es sich auch um endkonturnahe Gehäuseteile handeln. Nach dem Zusammenfügen der Gehäuseteile zu dem Vakuumpumpengehäuse kann die für das Vakuumpumpengehäuse vorgesehene Kontur, insbesondere unter Berücksichtigung von einzuhaltenden Toleranzen, aus der zusammengefügten Gehäusebaugruppe herausgearbeitet werden. Der dabei entstehende Abfall ist verhaltensmäßig gering, da die Gehäuseteile bereits endkonturnah ausgestaltet wurden.

Nach der Erfindung sind ein Flanschteil zum Anschließen des Vakuumpumpengehäuses an einen Rezipienten und ein Hauptgehäuseteil zur Aufnahme wenigstens einer Pumpstufe vorgesehen, und das Flanschteil ist mittels eines Fügeverfahrens vakuumdicht und unlösbar mit dem Hauptgehäuseteil verbunden. Das Flanschteil und das Hauptgehäuseteil können somit einzeln gefertigt und anschließend mittels des Fügeverfahrens zusammengefügt werden. Der Aufwand an Bearbeitungszeit und Material zur Fertigung des Flanschteils und des Hauptgehäuseteils kann dabei geringer gehalten werden als wenn das Flanschteil und das Hauptgehäuseteil einstückig aus einem Block Rohmaterial herausgearbeitet werden würden.

Das Flanschteil weist einen Flansch auf, an den ein Gegenflansch eines Rezipienten angeflanscht werden kann. Bei dem Flanschteil handelt es sich somit um ein Gehäuseteil, das - insbesondere bei einem Pumpengehäuse für eine Turbomolekularpumpe - einen Hochvakuumflansch zum Anschließen eines Rezipienten bereitstellt.

Vorzugsweise weist das Flanschteil einen rohrförmigen Abschnitt auf, an dem bei zusammengefügtem Gehäuse sich in Längsrichtung gesehen ein rohrförmiger Abschnitt des Hauptgehäuseteils anschließt, und der rohrförmige Abschnitt des Flanschteils und der rohrförmige Abschnitt des Hauptgehäuseteils sind mittels eines Fügeverfahrens vakuumdicht und unlösbar zusammengefügt. Die rohrförmigen Abschnitte des Flanschteils und des Hauptgehäuseteils können somit unmittelbar miteinander vakuumdicht und unlösbar verbunden sein.

Nach der Erfindung ist ein Gehäuseteil vorgesehen, das einen Kanal, insbesondere einen späteren Einlasskanal einer Vakuumpumpe, definiert, in welchem bei zusammengefügtem Gehäuse ein Halteteil zum Halten eines Permanentmagnetlagers angeordnet ist, und das Halteteil ist mittels eines Fügeverfahrens mit dem Gehäuseteil verbunden. Das Halteteil kann separat hergestellt werden und anschließend in seiner im Gehäuse vorgesehenen Position mit dem Gehäuseteil mittels des Fügeverfahrens dauerhaft verbunden werden.

Bei dem den Kanal definierenden Gehäuseteil kann es sich beispielsweise um den rohrförmigen Abschnitt des Flanschteils oder um den rohrförmigen Abschnitt des Hauptgehäuseteils handeln. Der Kanal kann bei einer das Vakuumpumpengehäuse aufweisenden Vakuumpumpe einen Abschnitt eines Pumpkanals bilden. Der Pumpkanal entspricht dabei dem Gasweg, längs dem Gas, z.B. aus einem Rezipienten, durch die Pumpe hindurch von einem Pumpeneinlass zu einem Pumpenauslass gefördert wird.

Nach einer Weiterbildung der Erfindung bestehen wenigstens zwei mittels eines Fügeverfahrens zusammengefügte Gehäuseteile aus unterschiedlichen Materialien. Beispielsweise kann ein Gehäuseteil aus einem metallischen Material, wie etwa Edelstahl oder Aluminium, bestehen, während ein anderes Gehäuseteil, das direkt mit dem Gehäuseteil aus metallischem Material zusammengefügt wird, aus einem Kunststoff oder einer Keramik besteht. So ist es z.B. durch Reibrührschweißen möglich, ein Gehäuseteil aus metallischem Material und ein Gehäuseteil aus Kunststoff vakuumdicht und dauerhaft zusammenzufügen.

Nach einer Ausgestaltung der Erfindung sind ein Flanschteil, insbesondere ein Flanschteil zum Anschließen des Gehäuses an einen Rezipienten, ein Hauptgehäuseteil, insbesondere zur Aufnahme wenigstens einer Pumpstufe, und eine elektrische Isolierung aus einem elektrisch isolierenden Material vorgesehen, und die Isolierung ist zwischen dem Flanschteil und dem Hauptgehäuseteil angeordnet, um das Flanschteil und das Hauptgehäuseteile elektrisch voneinander zu trennen, wobei die Isolierung vakuumdicht und unlösbar sowohl mit den Hauptgehäuseteil als auch mit dem Flanschteil mittels eines Fügeverfahrens zusammengefügt ist. Die Ausbildung des Vakuumpumpengehäuses aus einzelnen Gehäuseteilen ermöglicht somit die Realisierung eines Gehäuses, das bereits eine integrierte elektrische Isolierung zwischen dem Flanschteil und dem Hauptgehäuseteil aufweist. Ein an das Flanschteil angeschlossener Rezipient kann somit elektrisch von dem Hauptgehäuseteil entkoppelt werden.

Die Erfindung betrifft auch eine Vakuumpumpe, insbesondere eine Turbomolekularpumpe, mit einem erfindungsgemäßen Vakuumpumpengehäuse und mit wenigstens einer in das Gehäuse integrierten Pumpstufe.

Die Erfindung betrifft außerdem ein Verfahren zur Herstellung eines Vakuumpumpengehäuses, insbesondere für eine Turbomolekularpumpe, bei dem wenigstens zwei Gehäuseteile bereitgestellt werden, und bei dem die Gehäuseteile mittels eines Fügeverfahrens, insbesondere vakuumdicht, unlösbar zusammengefügt werden.

Bevorzugt werden die Gehäuseteile als endkonturnahe Gehäuseteile bereitgestellt, und die Gehäuseteile werden erst nach dem Zusammenfügen in ihre jeweils vorgesehene Endkontur gebracht. Dazu werden die Gehäuseteile bevorzugt mit wenigstens einem materialentfernenden Bearbeitungsverfahren, wie etwa einem Zerspan-, Ätz- und/oder Erodierverfahren, bearbeitet.

Bevorzugt wird ein Flanschteil zum Anschließen des Gehäuses an einen Rezipienten, insbesondere endkonturnah, aus einem, vorzugsweise plattenartigen, Rohkörper durch materialentfernende Bearbeitung, insbesondere durch Wasserstrahl- und/oder Laserschneiden, hergestellt.

Erfindungsgemäß wird das Flanschteil mit einem Hauptgehäuseteil, das zur Aufnahme wenigstens einer Pumpstufe vorgesehen ist, mittels eines Fügeverfahrens vakuumdicht und unlösbar verbunden. Nach einer Alternative, die nicht zu der Erfindung gehört, kann zwischen dem Hauptgehäuseteil und dem Flanschteil eine elektrische Isolierung vorgesehen werden, wobei sowohl das Hauptgehäuseteil als auch das Flanschteil mit der elektrischen Isolierung mittels eines Fügeverfahrens vakuumdicht und unlösbar verbunden werden.

Nach der Erfindung wird ein Halteteil zum Halten eines Permanentmagnetlagers in einem Kanal angeordnet, den ein Gehäuseteil, insbesondere ein rohrförmiger Abschnitt eines Flanschteils oder ein rohrförmiger Abschnitt eines Hauptgehäuseteils, definiert, und das Halteteil wird mittels eines Fügeverfahrens mit dem Gehäuseteil verbunden.

Bevorzugt werden mittels eines Fügeverfahrens wenigstens zwei Gehäuseteile aus unterschiedlichen Materialien unmittelbar miteinander vakuumdicht und dauerhaft verbunden. Somit kann auf einfache Weise ein Vakuumpumpengehäuse aus mehreren einzelnen Gehäuseteilen zusammengesetzt werden, bei dem die Gehäuseteile aus unterschiedlichen Materialien ausgebildet sind. Dadurch kann z.B. eine elektrische Isolierung zwischen einem Hauptgehäuseteil und einem Flanschteil direkt in das Vakuumpumpengehäuse integriert werden.

Bei dem Fügeverfahren handelt es sich bevorzugt um ein thermisches Fügeverfahren und insbesondere um ein Schweißverfahren, wie etwa Laserschweißen, Elektronenstrahlschweißen, Reibschweißen, Reibrührschweißen oder einer Kombination aus den genannten Schweißverfahren, oder um ein Lötverfahren. Ein jeweiliges Fügeverfahren zum Zusammenfügen zweier Gehäuseteile kann dabei insbesondere derart ausgewählt sein, dass sich eine optimale Verbindung, insbesondere im Hinblick auf Gasdichtigkeit und/oder Festigkeit, zwischen den Gehäuseteilen ergibt. Dabei kann z.B. ein Fügeverfahren zum Einsatz kommen, um das Flanschteil direkt mit dem Hauptgehäuseteil gasdicht zusammenzufügen, während ein anderes Fügeverfahren eingesetzt wird, um eine zwischen dem Flanschteil und dem Gehäuseteil vorgesehene elektrische Isolierung mit dem Flanschteil und dem Gehäuseteil gasdicht zu verbinden.

Nachfolgend wird die Erfindung beispielhaft unter Bezugnahme auf die beigefügten Figuren beschrieben. Es zeigen, jeweils schematisch,
- Fig. 1: eine Querschnittsdarstellung einer Vakuumpumpe,
- Fig. 2: eine Querschnittsdarstellung eines Flanschteils eines erfindungsgemäßen Vakuumpumpengehäuses,
- Fig. 3: eine Draufsicht auf das Flanschteil von Fig. 2,
- Fig. 4: eine Querschnittsdarstellung eines Hauptgehäuseteils eines erfindungsgemäßen Vakuumpumpengehäuses,
- Fig. 5: eine Ansicht des Hauptgehäuseteils von Fig. 4,
- Fig. 6: eine Querschnittsdarstellung einer Variante eines erfindungsgemäß gefügten Vakuumpumpengehäuses, und
- Fig. 7: eine Querschnittsdarstellung einer weiteren Variante eines beispielhaft gefügten Vakuumpumpengehäuses.

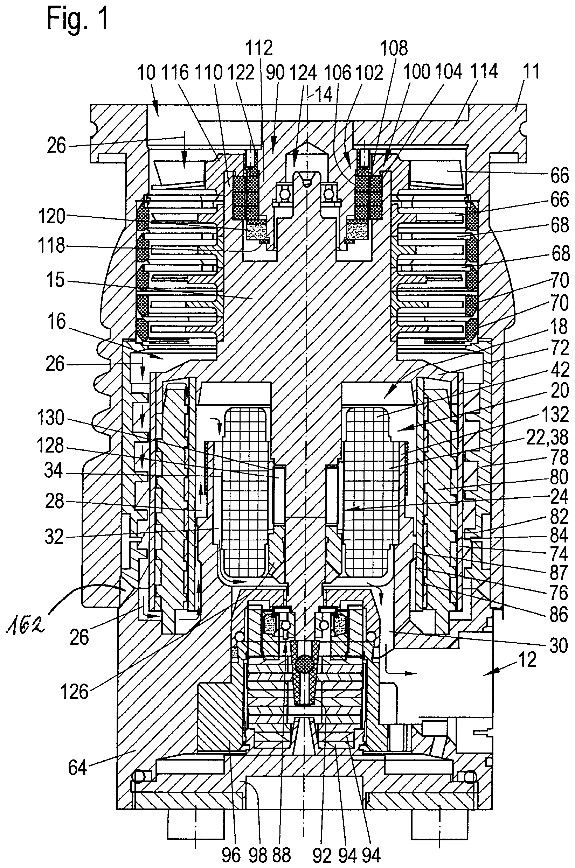

Die in Fig. 1 gezeigte Vakuumpumpe umfasst einen von einem Einlassflansch 11 umgebenen Pumpeneinlass 10 und einen Pumpenauslass 12 sowie mehrere Prozessgaspumpstufen zur Förderung des an dem Pumpeneinlass 10 anstehenden Prozessgases zu dem Pumpenauslass 12. Die Vakuumpumpe umfasst ein Gehäuse 64 und einen in dem Gehäuse 64 angeordneten Rotor 16 mit einer um die Rotationsachse 14 drehbar gelagerten Rotorwelle 15.

Die Pumpe ist im vorliegenden Ausführungsbeispiel als Turbomolekularpumpe ausgebildet und umfasst mehrere pumpwirksam miteinander in Serie geschaltete turbomolekulare Pumpstufen mit mehreren an der Rotorwelle 15 befestigten radialen Rotorscheiben 66 und zwischen den Rotorscheiben 66 angeordneten und in dem Gehäuse 64 festgelegten Statorscheiben 68, wobei eine Rotorscheibe 66 und eine benachbarte Statorscheibe 68 jeweils eine turbomolekulare Pumpstufe bilden. Die Statorscheiben 68 sind durch Abstandsringe 70 in einem gewünschten axialen Abstand zueinander gehalten.

Die Vakuumpumpe umfasst außerdem vier in radialer Richtung ineinander angeordnete und pumpwirksam miteinander in Serie geschaltete Holweckpumpstufen. Der Rotor der Holweckpumpstufen umfasst eine mit der Rotorwelle 15 einteilig ausgebildete Rotornabe 72 und zwei an der Rotornabe 72 befestigte und von dieser getragene zylindermantelförmige Holweckrotorhülsen 74, 76, die koaxial zur Rotationsachse 14 orientiert und in radialer Richtung ineinander geschachtelt sind. Ferner sind zwei zylindermantelförmige Holweckstatorhülsen 78, 80 vorgesehen, die ebenfalls koaxial zu der Rotationsachse 14 orientiert und in radialer Richtung ineinander geschachtelt sind. Eine dritte Holweckstatorhülse ist durch einen Aufnahmeabschnitt 132 des Gehäuses 64 gebildet, der zur Aufnahme und Festlegung des Antriebsmotors 20 dient.

Die pumpaktiven Oberflächen der Holweckpumpstufen sind durch die Mantelflächen, d.h. die radialen Innen- und Außenflächen, der Holweckrotorhülsen 74, 76, der Holweckstatorhülsen 78, 80 und des Aufnahmeabschnitts 132 gebildet. Die radiale Innenfläche der äußeren Holweckstatorhülse 78 liegt der radialen Außenfläche der äußeren Holweckrotorhülse 74 unter Ausbildung eines radialen Holweckspalts 82 gegenüber und bildet mit dieser die erste Holweckpumpstufe. Die radiale Innenfläche der äußeren Holweckrotorhülse 74 steht der radialen Außenfläche der inneren Holweckstatorhülse 80 unter Ausbildung eines radialen Holweckspalts 84 gegenüber und bildet mit dieser die zweite Holweckpumpstufe. Die radiale Innenfläche der inneren Holweckstatorhülse 80 liegt der radialen Außenfläche der inneren Holweckrotorhülse 76 unter Ausbildung eines radialen Holweckspalts 86 gegenüber und bildet mit dieser die dritte Holweckpumpstufe. Die radiale Innenfläche der inneren Holweckrotorhülse 76 liegt der radialen Außenfläche des Aufnahmeabschnitts 132 unter Ausbildung eines radialen Holweckspalts 87 gegenüber und bildet mit dieser die vierte Holweckpumpstufe.

Die vorstehend genannten pumpaktiven Oberflächen der Holweckstatorhülsen 78, 80 und des Aufnahmeabschnitts 132 weisen jeweils mehrere spiralförmig um die Rotationsachse 14 herum in axialer Richtung verlaufende Holwecknuten auf, während die gegenüberliegenden Mantelflächen der Holweckrotorhülsen 74, 76 glatt ausgebildet sind und das Gas im Betrieb der Vakuumpumpe in den Holwecknuten vorantreiben.

Zur drehbaren Lagerung der Rotorwelle 15 sind ein Wälzlager 88 im Bereich des Pumpenauslasses 12 und ein Permanentmagnetlager 90 im Bereich des Pumpeneinlasses 10 vorgesehen.

Im Bereich des Wälzlagers 88 ist an der Rotorwelle 15 eine konische Spritzmutter 92 mit einem zu dem Wälzlager 88 hin zunehmenden Außendurchmesser vorgesehen. Die Spritzmutter 92 steht mit zumindest einem Abstreifer eines Betriebsmittelspeichers in gleitendem Kontakt. Der Betriebsmittelspeicher umfasst mehrere aufeinander gestapelte saugfähige Scheiben 94, die mit einem Betriebsmittel für das Wälzlager 88, zum Beispiel mit einem Schmiermittel, getränkt sind. Im Betrieb der Vakuumpumpe wird das Betriebsmittel durch kapillare Wirkung von dem Betriebsmittelspeicher über den Abstreifer auf die rotierende Spritzmutter 92 übertragen und infolge der Zentrifugalkraft entlang der Spritzmutter 92 in Richtung des größer werdenden Außendurchmessers der Spritzmutter 92 zu dem Wälzlager 88 hin gefördert, wo es z.B. eine schmierende Funktion erfüllt. Das Wälzlager 88 und der Betriebsmittelspeicher sind durch einen wannenförmigen Einsatz 96 und ein Deckelelement 98 der Vakuumpumpe eingefasst.

Das Permanentmagnetlager umfasst eine rotorseitige Lagerhälfte 100 und eine statorseitige Lagerhälfte 102, welche jeweils einen Ringstapel aus mehreren in axialer Richtung aufeinander gestapelten permanentmagnetischen Ringen 104 bzw. 106 umfassen. Die Magnetringe 104, 106 liegen einander unter Ausbildung eines radialen Lagerspalts 108 gegenüber, wobei die rotorseitigen Magnetringe 104 radial außen und die statorseitigen Magnetringe 106 radial innen angeordnet sind. Das in dem Lagerspalt 108 vorhandene magnetische Feld ruft magnetische Abstoßungskräfte zwischen den Magnetringen 104, 106 hervor, welche eine radiale Lagerung der Rotorwelle 15 bewirken.

Die rotorseitigen Magnetringe 104 sind von einem Trägerabschnitt 110 der Rotorwelle getragen, welcher die Magnetringe 104 radial außenseitig umgibt. Die statorseitigen Magnetringe sind von einem statorseitigen Trägerabschnitt 112 getragen, welcher sich durch die Magnetringe 106 hindurch erstreckt und an radialen Streben 114 des Gehäuses 64 aufgehängt ist. Parallel zu der Rotationsachse 14 sind die rotorseitigen Magnetringe 104 in der einen Richtung durch ein mit dem Trägerabschnitt 110 gekoppeltes Deckelelement 116 und in der anderen Richtung durch einen radial vorstehenden Schulterabschnitt des Trägerabschnitts 110 festgelegt. Die statorseitigen Magnetringe 106 sind parallel zu der Rotationsachse 14 in der einen Richtung durch einen mit dem Trägerabschnitt 112 verbundenen Befestigungsring 118 und ein zwischen dem Befestigungsring 118 und den Magnetringen 106 angeordnetes Ausgleichselement 120 und in der anderen Richtung durch einen mit dem Trägerabschnitt 112 verbundenen Stützring 122 festgelegt.

Innerhalb des Magnetlagers ist ein Not- bzw. Fanglager 124 vorgesehen, welches im normalen Betrieb der Vakuumpumpe ohne Berührung steht und erst bei einer übermäßigen radialen Auslenkung des Rotors 16 relativ zu den Stator in Eingriff gelangt und mitläuft, um einen radialen Anschlag für den Rotor 16 zu bilden, der eine Kollision der rotorseitigen Strukturen mit den statorseitigen Strukturen verhindert. Das Fanglager 124 ist als ungeschmiertes Wälzlager ausgebildet und bildet mit dem Rotor 16 und/oder dem Stator einen radialen Spalt, welcher bewirkt, dass das Fanglager 124 im normalen Pumpbetrieb außer Eingriff ist. Die radiale Auslenkung, bei der das Fanglager 124 in Eingriff gelangt, ist groß genug bemessen, so dass das Fanglager 124 im normalen Betrieb der Vakuumpumpe nicht in Eingriff gelangt, und gleichzeitig klein genug, so dass eine Kollision der rotorseitigen Strukturen mit den statorseitigen Strukturen unter allen Umständen verhindert wird.

Die Vakuumpumpe umfasst einen Antriebsmotor 20 zum drehenden Antreiben des Rotors 16. Der Antriebsmotor 20 umfasst einen Motorstator 22 mit einem Kern 38 und mit ein oder mehreren in Fig. 1 nur schematisch dargestellten Spulen 42, die in an der radialen Innenseite des Kerns 38 vorgesehenen Nuten des Kerns 38 festgelegt sind.

Der Anker des Antriebsmotors 20 ist durch den Rotor 16 gebildet, dessen Rotorwelle 15 sich durch den Motorstator 22 hindurch erstreckt. Auf dem sich durch den Motorstator 22 hindurch erstreckenden Abschnitt der Rotorwelle 15 ist radial außenseitig eine Permanentmagnetanordnung 128 festgelegt. Zwischen dem Motorstator 22 und dem sich durch den Motorstator 22 hindurch erstreckenden Abschnitt des Rotors 16 ist ein Zwischenraum 24 angeordnet, welcher einen radialen Motorspalt umfasst, über den sich der Motorstator 22 und die Permanentmagnetanordnung 128 zur Übertragung des Antriebsmoments magnetisch beeinflussen.

Die Permanentmagnetanordnung 128 ist in axialer Richtung durch eine auf die Rotorwelle 15 aufgesteckte Befestigungshülse 126 an der Rotorwelle 15 fixiert. Eine Kapselung 130 umgibt die Permanentmagnetanordnung 128 an deren radialer Außenseite und dichtet diese gegenüber dem Zwischenraum 24 ab.

Der Motorstator 22 ist in dem Gehäuse 64 durch den gehäusefesten Aufnahmeabschnitt 132 festgelegt, welcher den Motorstator 22 radial außenseitig umgibt und den Motorstator 22 in radialer und axialer Richtung abstützt. Der Aufnahmeabschnitt 132 begrenzt gemeinsam mit der Rotornabe 72 einen Motorraum 18, in dem der Antriebsmotor 20 aufgenommen ist.

Der Motorraum 18 weist einen auf der einen Seite des Zwischenraums 24 angeordneten und mit der innenliegenden, vierten Holweckpumpstufe gasleitend verbundenen Einlass 28 und einen auf der gegenüberliegenden Seite des Zwischenraums 24 angeordneten und mit dem Pumpenauslass 12 gasleitend verbundenen Auslass 30 auf.

Der Kern 38 des Motorstators 22 weist an seiner radialen Außenseite in dem in Fig. 1 links gezeigten Bereich eine Aussparung 34 auf, die gemeinsam mit dem benachbarten Bereich des Aufnahmeabschnitts 132 einen Kanal 32 bildet, durch den das in den Motorraum 18 geförderte Prozessgas an dem Zwischenraum 24 vorbei von dem Einlass 28 zu dem Auslass 30 förderbar ist.

Der Gasweg, auf dem das Prozessgas von dem Pumpeneinlass 10 zu dem Pumpenauslass 12 gelangt, ist in Fig. 1 durch Pfeile 26 veranschaulicht. Das Prozessgas wird ausgehend von dem Pumpeneinlass 10 zuerst der Reihe nach durch die turbomolekularen Pumpstufen und anschließend der Reihe nach durch die vier Holweckpumpstufen gefördert. Das aus der vierten Holweckpumpstufe austretende Gas gelangt in den Motorraum 18 und wird von dem Einlass 28 des Motorraums 18 durch den Kanal 32 hindurch zu dem Auslass 30 des Motorraums 18 und dem Pumpenauslass 12 gefördert.

Bei der Vakuumpumpe der Fig. 1 ist der Einlassflansch 11 einstückig mit einem die Prozessgaspumpstufen aufnehmenden oberen Gehäuseteil ausgebildet, in welchen das untere Gehäuse 64 eingesteckt ist, wobei zwischen dem oberen Gehäuseteil und dem unteren Gehäuse 64 eine Dichtung 162 vorgesehen ist, um das Gehäuseinnere gegen Atmosphäre abzudichten. Dabei können der Einlassflansch 11 und der obere Gehäuseteil sowie das untere Gehäuse 64 jeweils aus einem großen Block Rohmaterial mit entsprechendem Arbeits- und Materialaufwand herausgearbeitet worden sein. Wie die Fig. 1 zeigt, ist das vom Einlassflansch 11 abgewandte untere Ende des Gehäuses 64 mit dem Deckelelement 98 verschlossen.

Ein erfindungsgemäßes Vakuumpumpengehäuse ist aus wenigstens zwei Gehäuseteilen zusammengesetzt, wobei die beiden Gehäuseteile mittels eines Fügeverfahrens, insbesondere vakuumdicht, und unlösbar zusammengefügt sind.

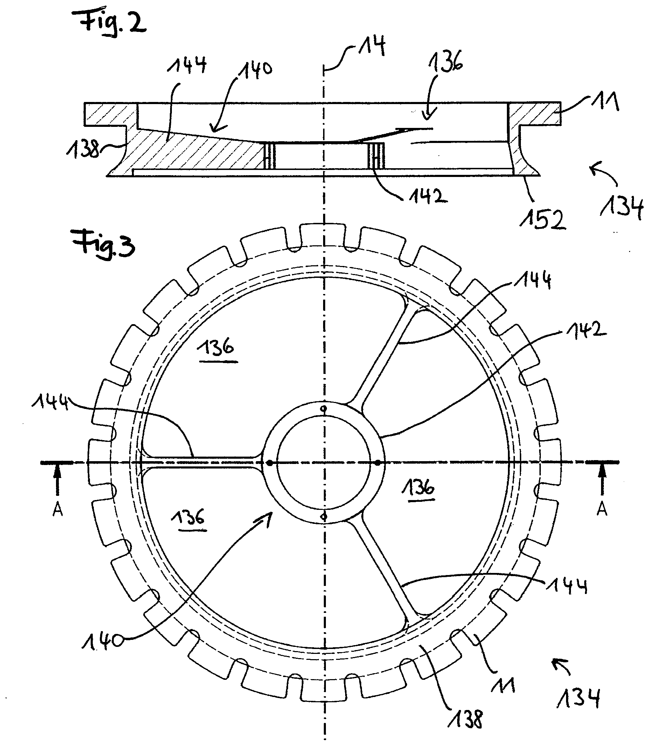

Bei einem der Gehäuseteile kann es sich um das in den Fig. 2 und 3 dargestellte Flanschteil 134 handeln. Fig. 3 zeigt eine Draufsicht auf das Flanschteil 134 bzgl. einer Ebene, die bei zusammengebautem Vakuumpumpengehäuse senkrecht durch die Rotationsachse 14 verläuft. Fig. 2 zeigt einen Schnitt durch das Flanschteil 134 längs der in der Draufsicht gemäß Fig. 3 gezeigten Linie A-A. Fig. 2 zeigt somit einen Schnitt in einer durch die Rotationsachse 14 verlaufenden Ebene.

Wie die Fig. 2 und 3 zeigen, weist das Flanschteil 134 einen bezogen auf die Rotationsachse 14 zentralen, in Richtung der Rotationsachse durchgehenden Einlasskanal 136 auf. Der Einlasskanal 136 bildet bei einer das Vakuumpumpengehäuse umfassenden Vakuumpumpe den Pumpeneinlass vergleichbar dem in Fig. 1 dargestellten Pumpeneinlass 10. Der Einlasskanal 136 bildet ferner einen Abschnitt des Gaswegs, längs dem das aus einem an das Flanschteil 134 angeschlossenen Rezipienten evakuierte Gas durch die Vakuumpumpe gefördert wird. Das Flanschteil 134 weist einen zumindest im Wesentlichen rohrförmigen Abschnitt 138 auf, der den Einlasskanal 136 umgibt. Am rohrförmigen Abschnitt 138 ist ein in Umfangsrichtung umlaufender, nach radial außen hervorstehender Flansch 11 ausgebildet, an den ein passender Gegenflansch eines Rezipienten angeflanscht werden kann, um den Rezipienten mit dem Vakuumpumpengehäuse zu verbinden (nicht gezeigt).

Im Einlasskanal 136 ist ein Halteteil 140 angeordnet, das zum Halten eines Permanentmagnetlagers (vgl. das Permanentmagnetlager 90 in Figur 1) vorgesehen ist. Das im Wesentlichen sternförmige Halteteil 140 umfasst einen konzentrisch mit der Rotationsachse 14 ausgerichteten Ringkörper 142, an dessen radial außenliegender Seite nach radial außen verlaufende Streben 144 angeordnet sind. Wie Fig. 3 zeigt, sind die Streben 144 bevorzugt in einem Winkel von zumindest im Wesentlichen 120 Grad in Umfangsrichtung versetzt zueinander angeordnet. Die radial außenliegenden Enden der Streben 144 sind mit der radial innenliegenden Seite des rohrförmigen Abschnitts 138 des Flanschteils 134 verbunden.

Nach einer Variante kann der rohrförmige Abschnitt 138 einstückig mit dem Halteteil 140 ausgebildet sein. Alternativ können die radial außenliegenden Enden der Streben 144 mittels eines, insbesondere thermischen, Fügeverfahrens mit der Innenseite des rohrförmigen Abschnitts 138 unlösbar zusammengefügt sein. Die radial außenliegenden Enden der Streben 144 können beispielsweise mit der Innenseite des rohrförmigen Abschnitts 138 verschweißt oder verlötet sein. Als Schweißverfahren kann dabei insbesondere Laserschweißen, Elektronenstrahlschweißen, Reibschweißen, Reibrührschweißen oder eine Kombination daraus zur Anwendung gekommen sein.

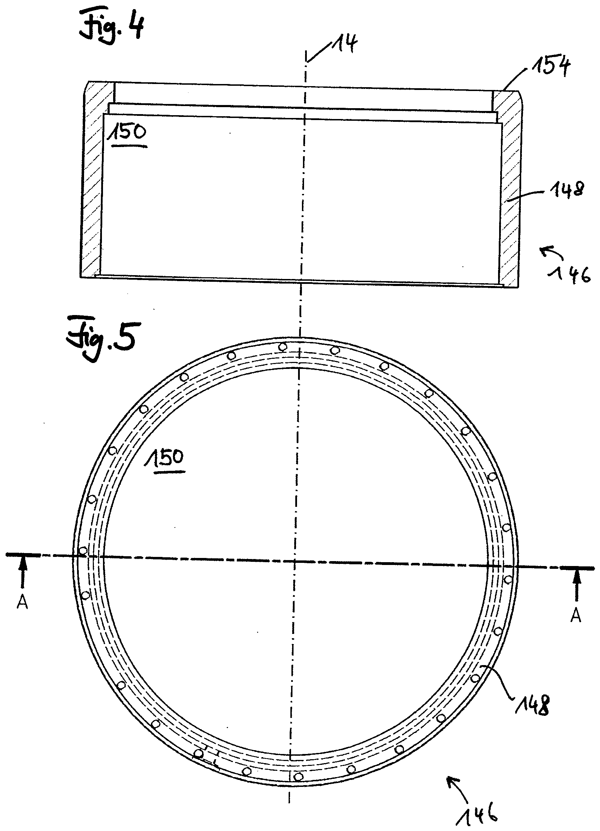

Ein erfindungsgemäßes Vakuumpumpengehäuse kann außerdem als Gehäuseteil das in den Fig. 4 und 5 dargestellte Hauptgehäuseteil 146 aufweisen. Dabei zeigt die Fig. 5 eine Ansicht des Hauptgehäuseteils 146 bzgl. einer senkrecht zur Rotationsachse 14 verlaufenden Ebene. Die Fig. 4 zeigt dagegen einen Querschnitt längs der in der Ansicht der Fig. 5 eingezeichneten Schnittlinie A-A. Fig. 4 zeigt somit einen Schnitt in einer durch die Rotationsachse 14 verlaufenden Querschnittsebene.

Wie die Fig. 4 und 5 ferner zeigen, besteht das Hauptgehäuseteil 146 im Wesentlichen aus einem rohrförmigen Abschnitt 148, der einen im Querschnitt kreisförmigen Innenraum 150 umgibt, der insbesondere zur Aufnahme der mit Bezug auf die Vakuumpumpe der Fig. 1 dargestellten Pumpstufen vorgesehen ist und in dem sich der Gasweg für das durch die Pumpe zu fördernde Gas fortsetzt.

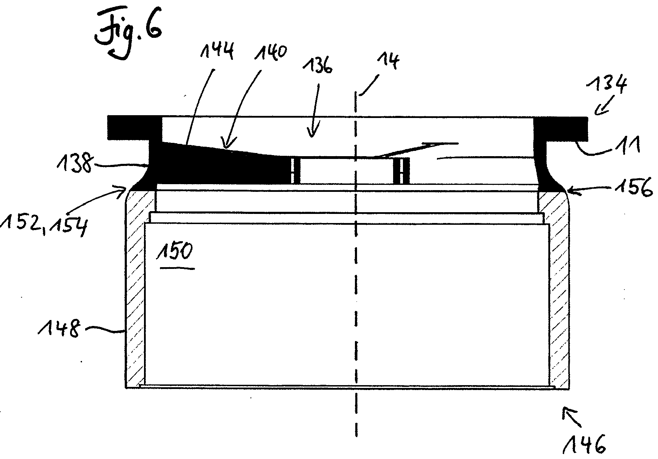

Wie Fig. 6 zeigt, sind zur Realisierung eines erfindungsgemäßen Vakuumpumpengehäuses das Flanschteil 134 und das Hauptgehäuseteil 146 mittels eines Fügeverfahrens vakuumdicht und unlösbar zusammengefügt. Dazu wird der rohrförmige Abschnitt 138 des Flanschteils 134 so an dem Hauptgehäuseteil 146 angeordnet, dass eine im Wesentlichen ringförmige Unterseite 152 (siehe auch Fig. 2) des rohrförmigen Abschnitts 138 des Flanschteils 134 auf einer ebenfalls ringförmig ausgestalteten Oberseite 154 (siehe auch Fig. 4) des rohrförmigen Abschnitts 148 des Hauptgehäuseteils 146 aufliegt. Zwischen der Unterseite 152 und der Oberseite 154 wird sodann mittels eines thermischen Fügeverfahrens eine mechanische Verbindung 156 ausgebildet, um das Hauptgehäuseteil 146 mit dem Flanschteil 134 dauerhaft und vakuumdicht zu verbinden.

Die mechanische Verbindung 156 kann z.B. von einer Schweißnaht gebildet sein bzw. eine Schweißnaht aufweisen, insbesondere wenn als thermisches Fügeverfahren ein Schweißverfahren, wie etwa Laserschweißen oder Elektronenstrahlschweißen, zum Einsatz kommt. Die mechanische Verbindung 156 kann auch als Lötnaht ausgestaltet sein. Die Unterseite 152 und die Oberseite 154 können somit miteinander verlötet sein.

Das Flanschteil 134 und das Hauptgehäuseteil 146 können vor dem Zusammenfügen zum Pumpengehäuse entsprechend der Fig. 6 endkonturnah ausgestaltet sein. Nach dem Zusammenfügen zum Vakuumpumpengehäuse können die Gehäuseteile 134, 146 noch nachbearbeitet werden, insbesondere unter Verwendung von wenigstens einem materialentfernenden Bearbeitungsverfahren, z.B. einem Zerspan-, Ätz- oder Erodierverfahren, um eine vorgegebene Endkontur für das Gehäuse zu erreichen.

Am vom Flanschteil 134 abgewandten Ende des rohrförmigen Abschnitts 148 des Hauptgehäuseteils 146 kann ein weiterer rohrförmiger Abschnitt mittels eines thermischen Fügeverfahrens vakuumdicht und unlösbar angefügt werden, um die axiale Länge des Hauptgehäuseteils 146 zu erweitern. Nach dem Einbau der Pumpstufen kann in der entsprechenden Weise wie bei der Vakuumpumpe der Fig. 1 die vom Flanschteil 134 entfernt liegende Unterseite des Hauptgehäuseteils 146 mit einem Deckel (vgl. das Deckelelement 98 in Fig. 1) verschlossen werden.

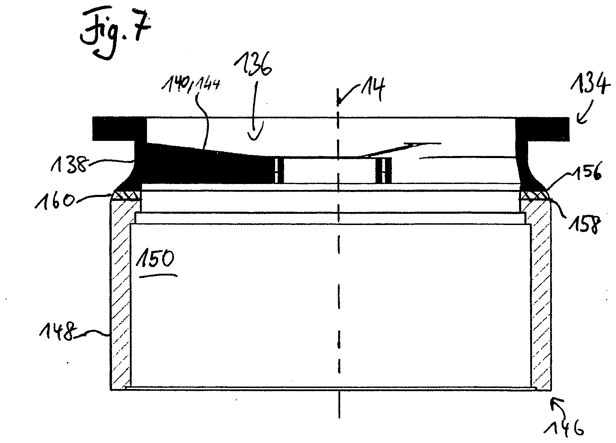

Bei der Variante der Fig. 7, die nicht zu der Erfindung gehört, ist zwischen dem Flanschteil 134 und dem Hauptgehäuseteil 146 eine ringförmige elektrische Isolierung 160 angeordnet, die das Flanschteil 134 und das Hauptgehäuseteil 146 elektrisch voneinander entkoppelt. Zwischen dem Flanschteil 134 und der Isolierung 160 ist eine dauerhafte und vakuumdichte mechanische Verbindung 156 ausgebildet, die mittels eines thermischen Fügeverfahrens, wie z.B. Reibrührschweißen, realisiert ist. Außerdem ist zwischen dem Hauptgehäuseteil 146 und der Isolierung 160 eine dauerhafte und vakuumdichte mechanische Verbindung 158 ausgebildet, die ebenfalls mittels eines thermischen Fügeverfahrens, wie z.B. Reibrührschweißen, realisiert ist. Das Flanschteil 134 und das Hauptgehäuseteil 146 können z.B. aus Aluminium oder Edelstahl ausgestaltet sein. Die elektrische Isolierung 160 kann z.B. aus einer Keramik oder einem Kunststoff ausgebildet sein.

Das Flanschteil 134 kann aus einem Block Rohmaterial, insbesondere auch einstückig mit dem Halteteil 140, herausgearbeitet, wie z.B. herausgefräst, sein. Das Flanschteil 134 kann auch aus einem z.B. plattenartigen Rohkörper durch materialentfernende Bearbeitung, insbesondere durch Wasserstrahl- und/oder Laserschneiden, hergestellt werden. Das Flanschteil 134 kann auch aus einem rohrförmigen Körper herausgearbeitet sein.

Auch das Hauptgehäuseteil 146 kann aus einem Block Rohmaterial herausgefräst sein. Das Hauptgehäuseteil 146 kann auch durch ein Rohr gebildet sein. Das Hauptgehäuseteil 146 kann auch aus mehreren, insbesondere teilzylindrischen, Bauteilen zusammengesetzt sein, wobei die Bauteile des Hauptgehäuseteils 146 ebenfalls mittels eines Fügeverfahrens zum Hauptgehäuseteil 146 zusammengefügt sein können.

### Bezugszeichenliste

- 10: Pumpeneinlass
- 11: Einlassflansch
- 12: Pumpenauslass
- 14: Rotationsachse
- 15: Rotorwelle
- 16: Rotor
- 18: Motorraum
- 20: Antriebsmotor
- 22: Motorstator
- 24: Zwischenraum
- 26: Pfeile, Gasweg
- 28: Einlass
- 30: Auslass
- 32: Kanal
- 34: Aussparung
- 38: Kern
- 42: Spule
- 64: Gehäuse
- 66: Rotorscheibe
- 68: Statorscheibe
- 70: Abstandsring
- 72: Rotornabe
- 74, 76: Holweckrotorhülse
- 78, 80: Holweckstatorhülse
- 82, 84, 86, 87: Holweckspalt
- 88: Wälzlager
- 90: Permanentmagnetlager
- 92: Spritzmutter
- 94: saugfähige Scheibe
- 96: wannenförmiger Einsatz
- 98: Deckelelement
- 100: rotorseitige Lagerhälfte
- 102: statorseitige Lagerhälfte
- 104, 106: Magnetring
- 108: Lagerspalt
- 110, 112: Trägerabschnitt
- 114: Strebe
- 116: Deckelelement
- 118: Befestigungsring
- 120: Ausgleichselement
- 122: Stützring
- 124: Fanglager
- 126: Befestigungshülse
- 128: Permanentmagnetanordnung
- 130: Kapselung
- 132: Aufnahmeabschnitt
- 134: Flanschteil
- 136: Einlasskanal
- 138: rohrförmiger Abschnitt
- 140: Halteteil
- 142: Ringkörper
- 144: Streben
- 146: Hauptgehäuseteil
- 148: rohrförmiger Abschnitt
- 150: Innenraum
- 152: Unterseite
- 154: Oberseite
- 156: Verbindung
- 158: Verbindung
- 160: Isolierung
- 162: Dichtung

## Patentansprüche

1. Vakuumpumpengehäuse, insbesondere für eine Turbomolekularpumpe, umfassend wenigstens zwei Gehäuseteile (134, 140, 146, 160), die mittels eines Fügeverfahrens unlösbar zusammengefügt sind,
wobei als ein Gehäuseteil ein Flanschteil (134) zum Anschließen des Gehäuses an einen Rezipienten und als ein weiteres Gehäuseteil ein Hauptgehäuseteil (146) zur Aufnahme wenigstens einer Pumpstufe vorgesehen sind und das Flanschteil (134) vakuumdicht und unlösbar mittels des Fügeverfahrens mit dem Hauptgehäuseteil (146) zusammengefügt ist, wobei das Flanschteil (134) oder das Hauptgehäuseteil (146) einen Kanal (136) definiert, in welchem bei zusammengefügtem Gehäuse ein Halteteil (140) zum Halten eines Permanentmagnetlagers (90) angeordnet ist, und wobei das Halteteil (140) mit dem Flanschteil (134) entweder einstückig ausgebildet oder mittels des Fügeverfahrens zusammengefügt ist, oder wobei das Halteteil (140) mit dem Hauptgehäuseteil (146) mittels des Fügeverfahrens zusammengefügt ist.

2. Vakuumpumpengehäuse nach Anspruch 1,
**dadurch gekennzeichnet, dass**
es sich bei den Gehäuseteilen (134, 140, 146, 160) um endkonturgetreue oder endkonturnahe Gehäuseteile handelt.

3. Vakuumpumpengehäuse nach Anspruch 1 oder 2,
**dadurch gekennzeichnet, dass**
das Flanschteil (134) einen rohrförmigen Abschnitt (138) aufweist, an den bei zusammengefügtem Gehäuse sich in Längsrichtung des rohrförmigen Abschnitts (138) gesehen ein weiterer rohrförmiger Abschnitt (148) des Hauptgehäuseteils (146) anschließt, und der rohrförmige Abschnitt (138) des Flanschteils (134) und der rohrförmige Abschnitt (148) des Hauptgehäuseteils (146) vakuumdicht und unlösbar mittels des Fügeverfahrens zusammengefügt sind.

4. Vakuumpumpengehäuse nach einem der vorhergehenden Ansprüche,
**dadurch gekennzeichnet, dass**
wenigstens zwei aus unterschiedlichen Materialen bestehende Gehäuseteile (134, 140, 146, 160) unlösbar und vakuumdicht mittels des Fügeverfahrens zusammengefügt sind, wobei, bevorzugt, eines der Gehäuseteile (134, 140, 146) aus einem metallischen Material, insbesondere Edelstahl oder Aluminium, und das andere Gehäuseteil (134, 140, 146) aus einem Kunststoff oder einer Keramik besteht.

5. Vakuumpumpengehäuse nach einem der vorhergehenden Ansprüche, **dadurch gekennzeichnet, dass**
es sich bei dem Fügeverfahren um ein Schweißverfahren, insbesondere um Laserschweißen, Elektronenstrahlschweißen, Reibschweißen, Reibrührschweißen oder einer Kombination aus den genannten Schweißverfahren, oder um ein Lötverfahren handelt.

6. Vakuumpumpe, insbesondere Turbomolekularpumpe, mit einem Vakuumpumpengehäuse nach einem der vorhergehenden Ansprüche und mit wenigstens einer in das Gehäuse integrierten Pumpstufe.

7. Verfahren zur Herstellung eines Vakuumpumpengehäuses nach einem der vorhergehenden Ansprüche, insbesondere für eine Turbomolekularpumpe, bei dem wenigstens zwei Gehäuseteile (134, 140, 146, 160) bereitgestellt werden, und die Gehäuseteile (134, 140, 146, 160) mittels eines Fügeverfahrens, insbesondere vakuumdicht, unlösbar zusammengefügt werden.

8. Verfahren nach Anspruch 7, **dadurch gekennzeichnet, dass**
die Gehäuseteile (134, 140, 146, 160) als endkonturnahe Gehäuseteile bereitgestellt werden, und die Gehäuseteile (134, 140, 146, 160) erst nach dem Zusammenfügen, insbesondere durch eine materialentfernende Bearbeitung, welche vorzugsweise ein Zerspanen, Ätzen und/oder Erodieren umfasst, in ihre jeweils vorgesehene Endkontur gebracht werden.

9. Verfahren nach Anspruch 7 oder 8, **dadurch gekennzeichnet, dass**
ein Flanschteil (134) zum Anschließen des Gehäuses an einen Rezipienten, insbesondere endkonturnah, aus einem, vorzugsweise plattenartigen, Rohkörper durch materialentfernende Bearbeitung, insbesondere durch Wasserstrahl- und/oder Laserschneiden, hergestellt wird.

10. Verfahren nach einem der Ansprüche 7 bis 9, **dadurch gekennzeichnet, dass**
mittels des Fügeverfahrens wenigstens zwei Gehäuseteile (134, 146, 140, 160) aus unterschiedlichen Materialen unmittelbar miteinander vakuumdicht und dauerhaft verbunden werden.

11. Verfahren nach einem Ansprüche 7 bis 10, **dadurch gekennzeichnet, dass**
es sich bei dem Fügeverfahren um ein Schweißverfahren, insbesondere um Laserschweißen, Elektronenstrahlschweißen, Reibschweißen, Reibrührschweißen oder einer Kombination aus den genannten Schweißverfahren, oder um ein Lötverfahren handelt.

## Claims

1. A vacuum pump housing, in particular for a turbomolecular pump, comprising at least two housing parts (134, 140, 146, 160) which are non-releasably joined together by means of a joining process,
wherein a flange part (134) for connecting the housing to a recipient is provided as one housing part and a main housing part (146) for receiving at least one pump stage is provided as a further housing part and the flange part (134) is joined together with the main housing part (146) in a vacuum-tight and non-releasable manner by means of the joining process;
wherein the flange part (134) or the main housing part (146) defines a channel (136) in which, when the housing is assembled, a holding part (140) for holding a permanent magnet bearing (90) is arranged; and wherein the holding part (140) is either formed in one piece with the flange part (134) or is joined together with the flange part (134) by means of the joining process; or wherein the holding part (140) is joined together with the main housing part (146) by means of the joining process.

2. A vacuum pump housing in accordance with claim 1,
**characterized in that**
the housing parts (134, 140, 146, 160) are housing parts true to the end contour or housing parts close to the end contour.

3. A vacuum pump housing in accordance with claim 1 or claim 2,
**characterized in that**
the flange part (134) has a tubular section (138) which, when the housing is assembled, is adjoined by a further tubular section (148) of the main housing part (146), viewed in the longitudinal direction of the tubular section (138), and the tubular section (138) of the flange part (134) and the tubular section (148) of the main housing part (146) are joined together in a vacuum-tight and non-releasable manner by means of the joining process.

4. A vacuum pump housing in accordance with any one of the preceding claims,
**characterized in that**
at least two housing parts (134, 140, 146, 160) composed of different materials are joined together in a non-releasable and vacuum-tight manner by means of the joining process, with, preferably, one of the housing parts (134, 140, 146) being composed of a metallic material, in particular stainless steel or aluminum, and the other housing part (134, 140, 146) being composed of a plastic or of a ceramic material.

5. A vacuum pump housing in accordance with any one of the preceding claims,
**characterized in that**
the joining process is a welding process, in particular laser welding, electron beam welding, friction welding, friction stir welding or a combination of said welding processes, or a soldering process.

6. A vacuum pump, in particular a turbomolecular pump, having a vacuum pump housing in accordance with any one of the preceding claims and having at least one pump stage integrated into the housing.

7. A method of manufacturing a vacuum pump housing in accordance with any one of the preceding claims, in particular for a turbomolecular pump, in which at least two housing parts (134, 140, 146, 160) are provided and the housing parts (134, 140, 146, 160) are non-releasably joined together by means of a joining process, in particular in a vacuum-tight manner.

8. A method in accordance with claim 7,
**characterized in that**
the housing parts (134, 140, 146, 160) are provided as housing parts close to the end contour and the housing parts (134, 140, 146, 160) are only brought into their respective provided end contour after the joining together, in particular by a material-removing machining which preferably comprises a cutting, an etching and/or an erosion.

9. A method in accordance with claim 7 or claim 8,
**characterized in that**
a flange part (134) for connecting the housing to a recipient, in particular close to the end contour, is produced from a raw body, preferably a platelike raw body, by a material-removing machining, in particular by water jet cutting and/or laser cutting.

10. A method in accordance with any one of the claims 7 to 9,
**characterized in that**
at least two housing parts (134, 146, 140, 160) composed of different materials are directly connected to one another in a vacuum-tight and permanent manner by means of the joining process.

11. A method in accordance with any one of the claims 7 to 10,
**characterized in that**
the joining process is a welding process, in particular laser welding, electron beam welding, friction welding, friction stir welding or a combination of said welding processes, or a soldering process.

## Revendications

1. Carter de pompe à vide destiné en particulier à une pompe turbomoléculaire, comprenant au moins deux parties de carter (134, 140, 146, 160) qui sont reliées entre elles de manière inamovible par un procédé d'assemblage,
dans lequel
une partie de carter est prévue sous forme de partie de bride (134) pour raccorder le carter à un récipient, et une autre partie de carter est prévue sous forme de partie principale de carter (146) pour recevoir au moins un étage de pompe, et la partie de bride (134) est assemblée avec la partie principale de carter (146) de manière étanche au vide et inamovible par le procédé d'assemblage,
la partie de bride (134) ou la partie principale de carter (146) définit un canal (136) dans lequel, lorsque le carter est assemblé, une partie de retenue (140) destinée à retenir un palier à aimant permanent (90) est disposée, et la partie de retenue (140) est soit réalisée d'un seul tenant avec la partie de bride (134) soit assemblée avec celle-ci par le procédé d'assemblage, ou
la partie de retenue (140) est assemblée avec la partie principale de carter (146) par le procédé d'assemblage.

2. Carter de pompe à vide selon la revendication 1,
**caractérisé en ce que**
les parties de carter (134, 140, 146, 160) sont des parties de carter qui sont conformes au contour final ou proches du contour final.

3. Carter de pompe à vide selon la revendication 1 ou 2,
**caractérisé en ce que**
la partie de bride (134) présente une portion tubulaire (138) à laquelle se raccorde une autre portion tubulaire (148) de la partie principale de carter (146), vue dans la direction longitudinale de la portion tubulaire (138), lorsque le carter est assemblé, et
la portion tubulaire (138) de la partie de bride (134) et la portion tubulaire (148) de la partie principale de carter (146) sont assemblées de façon étanche au vide et inamovible par le procédé d'assemblage.

4. Carter de pompe à vide selon l'une des revendications précédentes,
**caractérisé en ce que**
au moins deux parties de carter (134, 140, 146, 160) constituées de matériaux différents sont assemblées de manière inamovible et étanche au vide par le procédé d'assemblage, et
de préférence, l'une des parties de carter (134, 140, 146) est constituée d'un matériau métallique, en particulier d'acier inoxydable ou d'aluminium, et l'autre partie de carter (134, 140, 146) est constituée d'une matière plastique ou d'une céramique.

5. Carter de pompe à vide selon l'une des revendications précédentes,
**caractérisé en ce que**
le procédé d'assemblage est un procédé de soudage, en particulier un soudage au laser, un soudage par faisceau d'électrons, un soudage par friction, un soudage par friction-agitation ou une combinaison desdits procédés de soudage, ou un procédé de brasage.

6. Pompe à vide, en particulier pompe turbomoléculaire, ayant un carter de pompe à vide selon l'une des revendications précédentes et ayant au moins un étage de pompe intégré dans le carter.

7. Procédé de fabrication d'un carter de pompe à vide selon l'une des revendications précédentes, destiné en particulier à une pompe turbomoléculaire, dans lequel on fournit au moins deux parties de carter (134, 140, 146, 160) et on assemble les parties de carter (134, 140, 146, 160) de manière inamovible, en particulier de manière étanche au vide, à l'aide d'un procédé d'assemblage.

8. Procédé selon la revendication 7,
**caractérisé en ce que**
les parties de carter (134, 140, 146, 160) sont fournies sous forme de parties de carter proches du contour final, et les parties de carter (134, 140, 146, 160) ne sont mises en leur contour final respectif prévu qu'après avoir été assemblées, en particulier par une opération d'usinage par enlèvement de matière qui inclut de préférence un usinage, une gravure et/ou une érosion.

9. Procédé selon la revendication 7 ou 8,
**caractérisé en ce que**
une partie de bride (134) destinée à raccorder le carter à un récipient est fabriquée à partir d'un corps brut, de préférence en forme de plaque, par usinage par enlèvement de matière, en particulier par découpe au jet d'eau et/ou au laser, en particulier de manière à être proche du contour final.

10. Procédé selon l'une des revendications 7 à 9,
**caractérisé en ce que**
au moins deux parties de carter (134, 146, 140, 160) en matériaux différents sont directement reliées entre elles de manière étanche au vide et permanente par le procédé d'assemblage.

11. Procédé selon l'une des revendications 7 à 10,
**caractérisé en ce que**
le procédé d'assemblage est un procédé de soudage, en particulier un soudage au laser, un soudage par faisceau d'électrons, un soudage par friction, un soudage par friction-agitation ou une combinaison desdits procédés de soudage, ou un procédé de brasage.
